Europäisches Patentamt

European Patent Office

Office européen des brevets

(11) Veröffentlichungsnummer : **0 082 365 B1**

# EUROPÄISCHE PATENTSCHRIFT

(45) Veröffentlichungstag der Patentschrift :
07.05.86

(21) Anmeldenummer : 82111134.1

(22) Anmeldetag : 02.12.82

(51) Int. Cl.⁴ : **F 27 B 1/04, F 27 B 1/16, C 04 B 2/12**

(54) **Verfahren zum Betrieb von Schachtöfen.**

(30) Priorität : 23.12.81 CH 8267/81

(43) Veröffentlichungstag der Anmeldung :
29.06.83 Patentblatt 83/26

(45) Bekanntmachung des Hinweises auf die Patenterteilung : 07.05.86 Patentblatt 86/19

(84) Benannte Vertragsstaaten :
AT DE FR GB

(56) Entgegenhaltungen :
DE-A- 2 927 851
DE-B- 1 157 133
DE-B- 2 852 249
DE-C-    403 495
DE-C- 1 151 266
FR-A- 2 450 241
ZEMENT-KALK-GIPS, Band 35, Nr. 6, Juni 1982, Seiten 290-300, Wiesbaden-Biebrich, DE., E. FÜSSL et
al.: "25 Jahre industrielle Entwicklung des Gleichs-
trom-Regenerativ-Kalkschachtofens"

(73) Patentinhaber : **Maerz Ofenbau AG
Richard-Wagner-Str. 28
CH-8002 Zürich (CH)**

(72) Erfinder : **Füssl, Erwin
Scheideggstrasse 89
CH-8038 Zürich (CH)**

(74) Vertreter : **Meyer, Reinhard, Dipl.-Ing.
c/o Dr. A. R. Egli & Co. Patentanwälte Horneggstrasse 4
CH-8008 Zürich (CH)**

## Beschreibung

Die Erfindung betrifft ein Verfahren zum Betrieb von Schachtöfen für das Brennen von Kalkstein und ähnlichen mineralischen Rohstoffen, wobei gasförmige, flüssige oder feste Brennstoffe mittels Brennstoffzufuhrrohren in die Brennzone eines Ofenschachtes eingeleitet werden, und einen Ofenschacht zur Durchführung des Verfahrens.

Die sich ständig wandelnde Situation auf dem Brennstoffmarkt in bezug auf die Verfügbarkeit und die Preise von gasförmigen, flüssigen oder festen Brennstoffen zwingt viele Verbraucher, die Installation von Anlagen vorzusehen, um verschiedene Brennstoffe einsetzen zu können. Vielfach ist es auch üblich, dass eine Mindestabnahme des einen oder anderen Brennstoffes verlangt wird.

Bei Gleichstrom-Regenerativ-Schachtöfen zum Brennen von Kalkstein und ähnlichen mineralischen Rohstoffen mit zwei oder mehr durch einen Verbindungskanal verbundenen Schächten, von denen wechselweise der eine Schacht als Brenn- oder Gleichstromschacht und der andere Schacht bzw. die anderen Schächte als Abzugs- bzw. Gegenstromschacht bzw. -schächte betrieben wird bzw. werden, ist es bekannt, einen Brennstoff z. B. als Gas, in flüssiger Form oder in fester Form mittel Brennstoffrohren der jeweiligen Brennzone eines als Brennschacht betriebenen Ofenschachtes zuzuführen. Hierbei sind die Brennstoffzufuhrrohre in der Schüttung angeordnet und über den Querschnitt des Ofenschachtes verteilt, damit eine gleichmässige Brennstoffzufuhr in die Brennzone erreicht wird. So zeigen beispielsweise die FR-A 2 450 241 und die DE-A 29 27 851 eine Brennstofflanze, bei der durch ein Innenrohr Brennstoff einem Schachtofen zugeführt wird. Das Innenrohr ist von einem Mantelrohr umgeben und zwischen beiden zirkuliert Kühlluft.

Es ist auch bekannt, Schachtöfen der vorstehend erwähnten Art alternativ mit dem einen oder dem anderen Brennstoff zu beheizen. Bei einer solchen Umstellung treten jedoch erhebliche Probleme auf, auch wenn die Verwendung derselben Brennstoffrohre vorgesehen wird, denn eine solche Umrüstung stellt bei einer grossen Anzahl von Brennstoffzufuhrrohren je Schacht eine zeitraubende Arbeit dar, zu deren Durchführung die Ofenanlage für mehrere Stunden abgestellt werden muss.

Nach der DE-C 403 495 ist für Brenner bekannt, ein flüssiges Brennstoffluftgemisch als Kern, einen gasförmigen Brennstoff als äusseren Teil und die weitere Verbrennungsluft zwischen den beiden Brennstoffen zu führen oder auch die Verbrennungsluft mit Röhren durch den Gasstrom zu führen. Ausser dem flüssigen und dem gasförmigen Brennstoff benötigt dieser Brenner also noch Verbrennungsluft. Zudem kann ein derartiger Brenner nicht für das Brennen von Kalkstein und ähnlichen mineralischen Rohstoffen in einem dafür bestimmten Ofenschacht mit Vorwärmzone Anwendung finden, da er einen freien Verbrennungsraum ohne eine Brenngutschüttung od. dgl. voraussetzt.

Das gleiche gilt auch für die DE-A 1 151 266, welche sich mit einem Zwei- und Mehrstoffbrenner, beispielsweise für Teer, Gas und Luft, für hohe Wärmebeanspruchung mit von einem äusseren Kühlmantel umschlossenen, in Brennerdüsen endenden Brennstoff- und Luftzufuhrkanälen befasst. Auch hier wird mit einem festen und einem gasförmigen Brennstoff und Luft gearbeitet.

Hier setzt die Erfindung ein, der die Aufgabe zugrundeliegt, ein Verfahren der eingangs beschriebenen Art so auszugestalten, dass der Betrieb von Schachtöfen je nach den jeweiligen Umständen mit gasförmigen, flüssigen oder festen Brennstoffen durchgeführt werden kann, ohne dass hierzu ein grosser Zeitaufwand für die jeweilige Umrüstung erforderlich ist.

Diese Aufgabe wird gemäss der Erfindung dadurch gelöst, dass durch jedes, ein Innenrohr und ein Mantelrohr aufweisende Brennstoffzufuhrrohr mindestens zwei verschiedene, anteilig variierende Brennstoffe unterschiedlichen Aggregatzustandes in den Ofenschacht eingeleitet werden.

Zweckmässig werden hierbei die Brennstoffzufuhrrohre mit ineinanderliegenden, z. B. konzentrisch ineinanderliegenden, Zuleitungskanälen ausgebildet.

Die Erfindung ist anhand eines in der Zeichnung dargestellten Ausführungsbeispiels nachfolgend beschrieben. Es zeigen :

Figur 1 einen Vertikalschnitt durch einen stark vereinfacht dargestellten Gleichstrom-Regenerativ-Schachtofen mit zwei Schächten und

Figur 2 einen Vertikalschnitt einer schematisch dargestellten, in der Wand eines Ofenschachtes befestigten Brennstofflanze für die Zufuhr von zwei verschiedenen Brennstoffen.

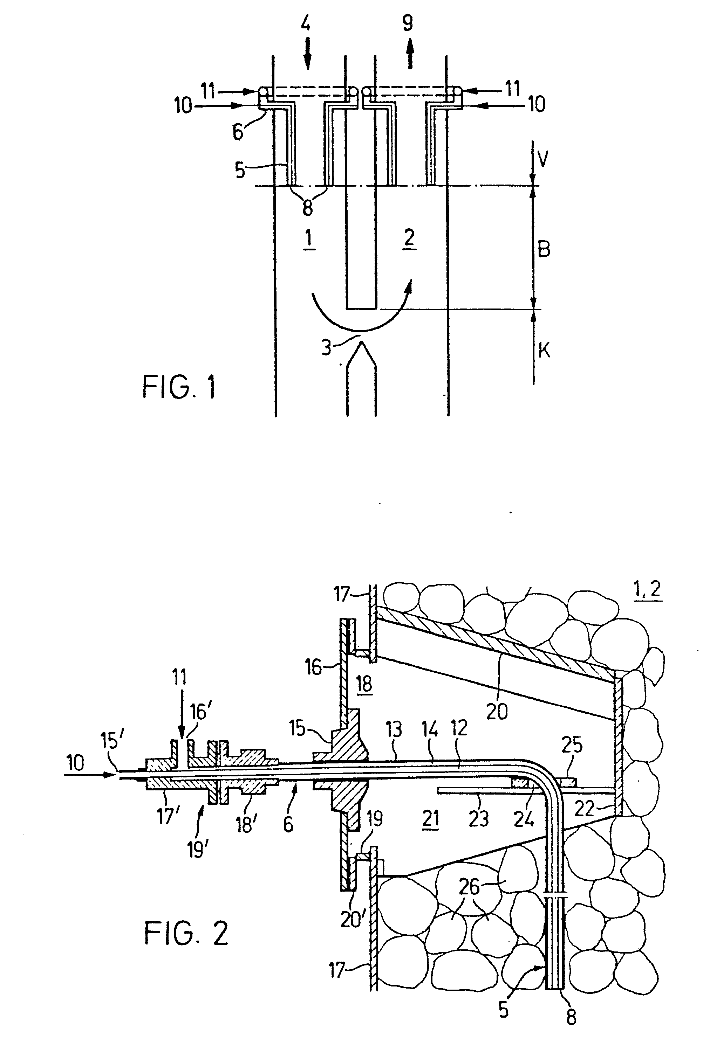

Der in Fig. 1 schematisch dargestellte Schachtofen weist zwei Schächte 1, 2 auf, die in eine Vorwärmzone V, eine Brennzone B und eine Kühlzone K unterteilt sind. Am unteren Ende der Brennzone B sind die Schächte durch einen Ueberströmkanal 3 miteinander verbunden. In Fig. 1 wird der Schacht 1 als Gleichstrom- bzw. Brennschacht verwendet, wobei durch einen Pfeil 4 der Eintritt der Verbrennungsluft angedeutet ist, die von oben in den Schacht 1 in nichtdargestellter Weise eingeführt wird.

In den Schächten 1, 2 sind je zwei als Brennstofflanzen 5 ausgebildete Brennstoffrohre 6 angeordnet, die sich durch die Vorwärmzone V erstrecken und deren Mündungen 8 den Anfang der Brennzone definieren. Die Brennstoffrohre 6 sind für die Zufuhr von mindestens zwei verschiedenen Brennstoffen ausgebildet, wie noch anhand von Fig. 2 dargestellt wird. Die Zufuhr der beiden verschiedenen Brennstoffe ist durch Pfeile 10, 11 angedeutet.

Der Schacht 2 wird in Fig. 1 als Gegenstrom-oder als Abzugsschacht verwendet, wobei die aus dem oberen Ende des Schachtes 2 austretenden Abgase durch einen Pfeil 9 dargestellt sind. Nach Beendigung eines Brennzyklus vertauschen die Schächte 1, 2 ihre Funktion ; Schacht 2 wird Gleichstrom- oder Brennschacht, dem die entsprechenden Brennstoffe 10, 11 zugeführt werden. Dem jeweiligen Abzugschacht werden keine Brennstoffe zugeführt, jedoch wird durch eine der für die Zufuhr der Brennstoffe vorgesehenen Leitungen ein Spülmedium eingeleitet, um ein Eindringen der staubhaltigen Rauchgase in das Innere der Brennstoffzufuhrrohre 6 zu verhindern.

Das in Fig. 2 dargestellte Brennstoffzufuhrrohr 6 ist als Brennstofflanze 5 ausgebildet und kann für die Zufuhr von zwei verschiedenen Brennstoffen verwendet werden. Das Brennstoffzufuhrrohr 6 weist ein zentrales Brennstoffrohr 12 und ein konzentrisch darum angeordnetes Mantelrohr 13 auf. Dadurch werden zwei Kanäle gebildet, einerseits der durch das zentrale Brennstoffrohr 12 gebildete Kanal und andererseits ein von der Aussenwand des zentralen Brennstoffrohrs 12 und der Innenwandung des Mantelrohrs 13 gebildeter Ringspalt-Kanal 14. Beide Kanäle enden im Bereich der Mündung 8 der Brennstofflanze 5. Entsprechend den beiden Kanälen sind zwei Leitungsanschlüsse 15', 16' vorgesehen, durch die je ein mit einem Pfeil 10, 11 bezeichneter Brennstoff eingeleitet wird. Die Leitungsanschlüsse 15', 16' gehören zu einem aus zwei Teilen 17', 18' gebildeten Anschlussstück 19', wobei der an das Mantelrohr 13 befestigte eine Teil 18' mit dem anderen Teil 17' verbunden inst, der die beiden Leitungsanschlüsse 15', 16' aufweist, derart, dass der Brennstoff 10 in das zentrale Brennstoffrohr 12 und der Brennstoff 11 in den Ringspalt-Kanal 14 geleitet wird.

Das Brennstoffzufuhrrohr 6 ist in einem Haltekopf 15 eingesetzt, der auf einer Befestigungsplatte 16 befestigt ist. Die Befestigungsplatte 16 deckt eine in der Wand 17 eines der Schächte 1, 2 angeordnete Oeffnung 18, die von einem einen Flansch 20' tragenden Stutzen 19 umgeben ist. An dem Flansch 20' ist die Befestigungsplatte 16 befestigt.

An der Innenseite der Schachtwand 17 ist eine dachförmige Abdeckung befestigt, die aus einem giebelförmigen Dach 20, Seitenwänden 21 und einer Stirnwand 22 besteht. In den Seitenwänden 21 ist ein gabelförmiges Auflager 23 mit gegen die Befestigungsplatte 16 offener Gabel befestigt, auf dem eine Stützplatte 25 abgestützt ist, die eine Oeffnung 24 für die Durchführung des Brennstoffzufuhrrohrs 6 aufweist und an diesem Rohr befestigt ist, z. B. durch Anschweissen ; diese Anordnung ermöglicht nach Absinken der Brenngutschüttung 26 bis zur Lanzenmündung 8 und Lösen der Befestigungsplatte 16 den Ausbau und/oder den Austausch des Brennstoffzufuhrrohrs 6.

Je nach den beiden verwendeten Brennstoffen wird der eine Brennstoff durch den Ringspalt 14 und der andere durch das zentrale Brennstoffrohr 12 zugeleitet. Sind die beiden Brennstoffe Kohlenstaub und ein Brenngas, z. B. Erdgas, wird das Brenngas durch den Ringspalt 14 und der Kohlenstaub durch das zentrale Brennstoffrohr 12 geleitet. Sind die Brennstoffe Oel und Brenngas, wird das Oel im zentralen Brennstoffrohr 12 und das Brenngas im Ringspalt 14 eingeleitet. Sind die Brennstoffe Oel und Kohlenstaub, wird der Kohlenstaub im Ringspalt und das Oel im zentralen Brennstoffrohr 12 eingeleitet. Zweckmässig wird das Oel immer durch das zentrale Brennstoffrohr 12 eingeleitet. Andernfalls besteht die Gefahr der Verkrackung des Oels.

Erfindungsgemäss ist es auch möglich, das Brennstoffzufuhrrohr 6 mit mehr als zwei Kanälen auszubilden. Durch die erfindungsgemässen Brennstoffzufuhrrohre 6 gelingt es, den Betrieb eines Schachtofens zu vereinfachen, wenn der Brennbetrieb unter Verwendung verschiedener Brennstoffe durchgeführt wird. Das im jeweiligen Gegenstromschacht eingeleitete Spülmedium kann sowohl durch das zentrale Brennstoffrohr 12 als auch durch den Ringspalt 14 geleitet werden.

Das beschriebene, als Mehrfachbrennstofflanze 5 ausgebildete Brennstoffzufuhrrohr 6 erlaubt den Betrieb gleichzeitig mit zwei verschiedenen Brennstoffen mit variierenden Anteilen, aber auch den Betrieb von praktisch nur einem gasförmigen, flüssigen oder festen Brennstoff. Wird einer der Brennstoffe ganz abgeschaltet, kann durch den entsprechenden Brennstoffkanal ein Spülmedium wie Luft oder ein inertes Gas zugeführt werden.

## Patentansprüche

1. Verfahren zum Betrieb von Schachtöfen für das Brennen von Kalkstein und ähnlichen mineralischen Rohstoffen, wobei gasförmige, flüssige oder feste Brennstoffe mittels Brennstoffzufuhrrohren in die Brennzone eines Ofenschachtes eingeleitet werden, dadurch gekennzeichnet, dass durch jedes, ein Innenrohr und ein Mantelrohr aufweisende Brennstoffzufuhrrohr mindestens zwei verschiedene, anteilig variierende Brennstoffe unterschiedlichen Aggregatzustandes in den Ofenschacht eingeleitet werden.

2. Verfahren nach Anspruch 1, dadurch gekennzeichnet, dass die verschiedenen Brennstoffe in ineinanderliegenden, vorzugsweise konzentrisch ineinanderliegenden, Zuleitungskanälen geführt werden.

3. Verfahren nach Anspruch 2, dadurch gekennzeichnet, dass zur Ausbildung der Brennstoffzufuhrrohre mit einem zentralen Innenrohr einerseits und einem Mantelrohr andererseits unter Bildung eines Ringspaltes zwischen dem Innen- und dem Mantelrohr bei Verwendung eines gasförmigen und eines festen Brennstoffes der gasförmige Brennstoff im Ringspalt und der feste Brennstoff im Innenrohr, bei Verwendung eines flüssigen und eines gasförmigen Brennstoffes der gasförmige Brennstoff im Ringspalt und der flüssige Brennstoff im Innenrohr und bei Verwendung eines flüssigen und eines festen Brennstoffes der flüssige Brennstoff im Innenrohr und der feste Brennstoff im Ringspalt den Ofenschächten zugeführt werden.

4. Ofenschacht für das Brennen von Kalkstein und ähnlichen mineralischen Rohstoffen durch Einleitung von gasförmigen, flüssigen oder festen Brennstoffen mittels Brennstoffzufuhrrohren durch eine Ofenwand in die Brennzone eines Ofenschachtes, dadurch gekennzeichnet dass jedes Brennstoffzufuhrrohr (6) zumindest zwei getrennte Leitungsanschlüsse (15', 16') zum Anschliessen eines zentralen Brennstoffrohres (12) und eines Ringspalt-Kanales (14) an Brennstoffquellen unterschiedlichen Aggregatzustandes aufweist und in der Ofenwand (17) des Ofenschachtes (1, 2) und im Innenraum einer Abdeckung (20) abgestützt ist.

5. Ofenschacht nach Anspruch 4, dadurch gekennzeichnet, dass das Brennstoffzufuhrrohr (6) an seinem horizontalen Eintrittsteil mittels eines Haltekopfes (15) in einer an der Schachtwand (17) befestigten Befestigungsplatte (16) gelagert und auf einem innerhalb der Abdeckung (20) liegenden Auflager (23) abgestützt ist.

6. Ofenschacht nach Anspruch 5, dadurch gekennzeichnet, dass das Auflager (23) als gegen die Befestigungsplatte (16) offene Gabel ausgebildet ist, auf der das Brennstoffzufuhrrohr (6) mittels einer, eine Oeffnung (24) für die Durchführung des Brennstoffzufuhrrohrs (6) aufweisenden und am Brennstoffzufuhrrohr (6) befestigten Stützplatte (25) abgestützt ist.

**Claims**

1. Process for operating a shaft furnace for burning limestone and similar mineral raw materials by supplying gaseous, liquid or solid fuels to the combustion zone of a furnace shaft by means of fuel supply pipes, characterized in that through each supply pipe, comprising an central pipe and a jacket pipe, at least two different fuels in varying portions and in different physical conditions are supplied to the furnace shaft.

2. Process according to claim 1, characterized in that the different fuels are supplied through separate supply channels, located within each other, preferably in a concentrical arrangement.

3. Process according to claim 2, characterized in that in the case that the supply channels comprise a central pipe and a jacket pipe, leaving a circular gap therebetween and that a gaseous and a solid fuel are used, the gaseous fuel is supplied to the furnace shaft through the central pipe, that in the case that a liquid and a gaseous fuel are used, the gaseous fuel is supplied to the furnace shaft through the circular gap and the liquid fuel through the central pipe, and that in the case, that a solid and a liquid fuel are used, the liquid fuel is supplied to the furnace shaft through the central pipe and the solid fuel is supplied through the circular gap.

4. Furnace shaft for burning limestone and similar mineral raw materials by supplying gaseous, liquid or solid fuel into the combustion zone of a furnace shaft by means of fuel supply pipes through a furnace wall, characterized in that each fuel supply pipe (6) comprises at least two separate pipe connections (15', 16') for connecting a central fuel supply pipe (12) and a ring slot channel (14) to fuel sources of different physical conditions, and that each supply pipe (6) is fixed in the wall (17) of the furnace shaft (1, 2) and supported in the interior of a couer (20).

5. Shaft according to claim 4, characterized in that the fuel supply pipe (6) is supported at its horizontal entry portion by means of a retaining head (15) fixed to fastening plate (16) mounted on the shaft wall (17) and on a bearing (23) on the couer (20).

6. Shaft according to claim 5, characterized in that the bearing (23) is constructed as a fork, open against the fastening plate (16), on which the fuel supply pipe (6) is supported by means of a support plate (25) having an opening (24) for the introduction of the fuel supply pipe (6).

**Revendications**

1. Procédé pour l'exploitation de fours à cuves pour la cuisson de la pierre à chaux et de matières premières minérales analogues dans lesquels des combustibles gazeux, liquides ou solides sont introduits dans la zone de cuisson d'un four à cuve au moyen de tubes d'amenée de combustibles caractérisé en ce que par chaque tube d'amenée de combustibles comportant un tube intérieur et un tube formant enveloppe des proportions variables de combustibles ayant au moins deux états physiques différents sont introduites dans le four à cuves.

2. Procédé selon la revendication 1, caractérisé en ce que les différents combustibles sont amenés dans des conduits d'amenée insérés l'un dans l'autre, de préférence concentriquement.

3. Procédé selon la revendication 2, caractérisé en ce que, pour l'amenée de combustibles dans des tubes comportant, d'une part, un tube intérieur central, et d'autre part un tube formant enveloppe, un espace annulaire étant compris entre le tube intérieur et le tube formant enveloppe, on introduit dans le four à cuves dans le cas de l'utilisation d'un combustible gazeux et d'un combustible solide, le combustible gazeux dans l'espace annulaire et le combustible solide dans le tube intérieur, dans le cas d'un combustible liquide et d'un combustible gazeux le combustible gazeux dans l'espace annulaire et le combustible liquide dans le tube intérieur et dans le cas d'un combustible liquide et d'un combustible solide, le combustible liquide dans le tube intérieur et le combustible solide dans l'espace annulaire.

4. Four à cuves pour la cuisson de pierre à chaux et de matière premières minérales analogues avec introduction de combustibles gazeux, liquides ou solides dans la zone de cuisson par des tubes d'amenée de combustibles traversant la paroi du four caractérisé en ce que chaque tube (6) d'amenée de combustibles comporte au moins deux raccords de conduits (15', 16') pour le raccordement d'un tube à combustible central (12) et d'un conduit formé par un espace annulaire (14) à des sources de combustibles ayant des états physiques différents et prend appui sur la paroi de four (17) de la cuve (1, 2) du four et à l'intérieur d'une partie couverte (20).

5. Cuve de four selon la revendication 4, caractérisée en ce que le tube d'amenée de combustibles (6) est monté sur palier, au niveau de sa partie d'entrée horizontale au moyen d'une tête de maintien (15) dans une plaque de fixation (16) fixée à la paroi (17) de la cuve et prend appui sur un appui (23) placé à l'intérieur de la partie couverte (20).

6. Cuve de four selon la revendication 5, caractérisée en ce que l'appui (23) a la forme d'une fourche, ouverte vers la plaque de fixation (16), sur laquelle le tube d'amenée des combustibles prend appui au moyen d'une plaque d'appui (25) comportant une ouverture (24) pour le passage du tube d'amenée de combustibles (6) et fixée au tube d'amenée de combustibles (6).

FIG. 1

FIG. 2